# EUROPEAN PATENT APPLICATION

(11) **EP 4 773 052 A1**
(43) Date of publication of application: **08.07.2026**
(21) Application number: 26150006.0
(22) Date of filing: 02.01.2026
(51) Int. Cl.: G06Q 10/06, G06Q 10/10, G06Q 50/163, G06Q 50/26, G07C 9/27, G07C 9/28

(54) **TECHNIQUES FOR VISUALIZATION OF ACCESS EVENTS ACROSS A FACILITY**

(30) Priority: 07.01.2025 US 202519011648
(71) Applicant: Honeywell International Inc., Charlotte, NC 28202 (US)
(72) Inventor: A, Ramkumar, Charlotte, 28202 (US); M, Ajaikumar, Charlotte, 28202 (US); PALANISAMY, Anbarasu, Charlotte, 28202 (US)
(74) Representative: Haseltine Lake Kempner LLP

(57) **Abstract**

Techniques for visualization of access events across a facility are described. In one aspect, event data associated with one or more users from multiple access detection units of the facility is obtained. This event data indicates interactions between users and access detection units of the facility. A layout representation of the facility, overlaid with the locations of the access detection units of the facility, is accessed. The event data is synthesized to determine paths traversed by users, where synthesizing includes transforming the event data into a visually dynamic format. A visual representation of the event data is then generated, indicating user movements within the facility in correspondence with the layout representation. Thereafter, this visual representation is provided to personnel.

## Description

### BACKGROUND

Typically, facilities, such as modern commercial buildings, warehouses, industrial spaces, and the like, employ access detection systems to verify or provide access to a personnel entering or leaving the facility. Access detection systems may include various components such as card readers, biometric scanners, keypads, or other authentication devices positioned at entry and exit points throughout the facility. These systems may record data related to each access event, including but not limited to the time, date, location, identity of the personnel accessing the facility, and the like.

### SUMMARY

Aspects of the present subject matter provide techniques for visualization of access events across a facility.

According to an example of the present subject matter, a method for visualization of access events across a facility is provided. The method includes obtaining event data associated with one or more users from one or more access detection units of the facility. The event data being indicative of an interaction of the one or more users with at least one of the one or more access detection units of the facility. Further, the method includes accessing a layout representation of the facility overlaid with the one or more access detection units of the facility. The event data associated with the one or more users is synthesized to determine a path traversed by the one or more users for a first time period, where synthesizing the event data includes transforming the event data into a visually dynamic format. Further, a visual representation of the event data is generated in the visually dynamic format indicating a movement of the one or more users within the facility for the first time period in correspondence to the layout representation of the facility. The visual representation may then be provided to a personnel for visualization of access events across the facility.

According to another example of the present subject matter, an access management system for visualization of access events across a facility is provided. The system includes at least one processor, a memory comprising instructions that, when executed by the at least one processor causes a data retriever to obtain event data associated with one or more users from one or more access detection units of the facility, where the event data is indicative of an interaction of the one or more users with at least one of the one or more access detection units of the facility. The data retriever is to further access a layout representation of the facility and overlay the one or more access detection units of the facility onto the layout representation. Further, the at least one processor causes an event synthesizer to synthesize the event data associated with the one or more users to determine a path traversed by the one or more users for a first time period. Synthesizing the event data includes transforming the event data into a visually dynamic format and generate a visual representation of the event data in the visually dynamic format indicating a movement of the one or more users within the facility for the first time period in correspondence to the layout representation of the facility. Further, the at least one processor causes a display unit to display the visual representation to a personnel for visualization of access events across the facility.

According to another example of the present subject matter, a non-transitory computer readable medium for visualization of access events across a facility containing program instruction is provided, that, when executed, causes the processor to obtain event data associated with one or more users from one or more access detection units of the facility, where the event data is in a text-based format and where the event data is indicative of an interaction of the one or more users with at least one of the one or more access detection units of the facility. Further, the instructions cause the processor to access a layout representation of the facility overlaid with the one or more access detection units of the facility, synthesize the event data associated with the one or more users to determine a path traversed by the one or more users for a first time period, where synthesizing the event data includes transforming the event data into a visually dynamic format, generate a visual representation of the event data in the visually dynamic format indicating a movement of the one or more users within the facility for the first time period in correspondence to the layout representation of the facility, where the visual representation includes at least one of a video and a Graphics Interchange Format (GIF), and display the visual representation to a personnel for visualization of access events across the facility.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.
Fig. 1 illustrates a network environment, in accordance with an example implementation of the present subject matter.
Fig. 2 illustrates an access management system, in accordance with an example implementation of the present subject matter.
Fig. 3 illustrates an exemplary visual representation, in accordance with an example implementation of the present subject matter.
Fig. 4A illustrates an example of visual representation of a user's movement across the facility, in accordance with an example implementation of the present subject matter.
Fig. 4B illustrates a continuation of the example 4A of visual representation of a user's movement across the facility, in accordance with an example implementation of the present subject matter.
Fig. 4C illustrates a continuation of the example 4B of visual representation of a user's movement across the facility, in accordance with an example implementation of the present subject matter.
Fig. 5 illustrates an example method for visualization of access events across a facility, in accordance with an example implementation of the present subject matter.
Fig. 6 illustrates an example method for visualization of anomalies in access events across a facility, in accordance with an example implementation of the present subject matter.
Fig. 7 an example method for creating a time lapse clip for visualization of access events across the facility, in accordance with an example implementation of the present subject matter.
Fig. 8 illustrates another example method for visualization of access events across the facility, in accordance with an example implementation of the present subject matter.
Fig. 9 illustrates another example method for visualization of access events across the facility, in accordance with an example implementation of the present subject matter.
Fig. 10 illustrates a non-transitory computer-readable medium for visualization of access events across the facility, in accordance with an example implementation of the present subject matter.

### DETAILED DESCRIPTION

The present subject matter relates to techniques for enhancing visualization of access events across a facility. In modern buildings and complexes, managing and monitoring access control may contribute to maintaining security, supporting operational efficiency, and protecting assets. As facilities grow in size and complexity, the volume of access data generated often increases, which can present challenges in interpretation and analysis. This complexity is further amplified in multi-tenant buildings, facilities with varying security levels, or facilities with dynamic access requirements, where traditional access control methods may struggle to provide comprehensive oversight.

Generally, access control systems generate text-based logs of entry and exit events. These logs typically include a record of access activities, such as timestamps, user identifications, and access points. While these logs provide a record of such access activities, they are often cumbersome to analyse, especially when dealing with large volumes of data or attempting to identify patterns over time. For instance, a large facility may generate tens of thousands of access events daily, resulting in millions of data points over extended periods. The sheer quantity of data entries can overwhelm traditional analysis methods, making it challenging to extract meaningful insights or detect anomalies efficiently. Moreover, text-based logs may not inherently convey spatial relationships or movement flows within a facility, further complicating the task of understanding complex access patterns or behaviors.

Traditional monitoring of access activities are highly reliant on manual intervention, where security personnel or facility managers, and the like, may frequently sift through extensive reports manually to trace movements across the facility. On sifting through these reports manually, security personnel may have to mentally map these events to the building's layout, trying to visualize how the employee might have moved from one area to another. This process not only consumes valuable time but may also introduce significant security risks. Security personnel, faced with overwhelming amounts of data, may inadvertently overlook critical patterns or anomalies in access behaviour. This delay in identifying potential threats or unusual activities could compromise the overall security posture of the facility, leaving vulnerabilities unaddressed for extended periods. Furthermore, manual analysis can also lead to inconsistent interpretations among different security personnel, potentially resulting in varied security responses and a lack of standardization in threat assessment.

For instance, a security manager overseeing a large corporate building may receive a report, for example a PDF report containing thousands of access events logged by employees entering and exiting the building. The report may include columns indicating the date, time, employee name, door location, and card number. In the event of a suspected security breach, the manager may need to determine the movement patterns of a particular employee over, for example, an eight-hour period. This process would involve scrolling through hundreds of pages of data to manually trace each access event associated with the concerned employee's card number. Once identified, the manager might have to mentally map these events to the building's layout, trying to visualize how the employee might have moved from one area to another, making the whole process cumbersome and inconvenient. The lack of visual representation in these reports makes it particularly challenging to communicate complex access patterns or potential security concerns to stakeholders or decision-makers who may not be intimately familiar with the facility layout, potentially impeding timely and effective decision-making.

In some other techniques, the security personnel may also generate simple charts or graphs from the extensive text-based reports or excel data. These charts and graphs may be limited to displaying static data to depict, for example, how many times doors were accessed within specific time intervals. However, these charts being static in nature, are limited in their ability to depict full movement patterns relative to the employee's position in the facility, thereby hindering an efficient analysis of the employee's movement across the facility. Additionally, these reports also lack the capability of dynamic playback of events to review past movements in real-time, which may impede the ability to quickly identify patterns, anomalies, or potential security risks.

According to examples of the present subject matter, static access control data may be transformed into interactive, graphical visualizations on existing floor maps or plans of the facility. In operation, to enhance visualization of access events across a facility, in one aspect, event data associated with users may be obtained from access detection units of the facility. This event data may be indicative of user interactions with the access detection units. A layout representation of the facility, overlaid with the locations of the access detection units, may then be accessed. The event data associated with the users may be synthesized to determine paths traversed by the users over a specified time period, which may involve transforming the event data into a visually dynamic format. A visual representation of the event data in this dynamic format may be generated, where the visual representation, such as a Graphics Interchange Format (GIF) or a video, and the like is indicative of a movement of the one or more users within the facility for the first time period in correspondence to the layout representation of the facility. For example, the visual representation may be provided to a security personnel of the facility to trace the movement of a user in the facility. In one example, movement of multiple users may be generated and traced simultaneously.

Further, the visual representation may be condensed from the first time period into a second time period. For example, where the visual representation is generated for a time period of 2 hours to trace the movement of user 'X' from 9:00am to 11:00 am across the facility, the visual representation may be compressed to represent the movement of the user 'X' in, for example two minutes, and the like. In another example, a time-lapsed video of the visual representation displaying the movement of the one or more users within the facility may be created.

Further, in one example, the synthesized event data may be analyzed to identify anomalies in the movement of the one or more users across the facility. The identified anomalies may also be highlighted in the visual representation, allowing a personnel monitoring the user's movement to make quick and informed decisions. Further, new event data from the multiple access detection units of the facility may be continuously obtained to update the visual representation in real-time based on the new event data. In one example, the visual representation may be filtered and generated for specific criteria, for example, for a particular user, for a group of users, a specific time range, an area within the facility, a type of access event, and the like.

In one example, the visual representation may be displayed on a user interface, where the user interface allows for personnel interaction with the visual representation. For example, a user input through a graphical user interface may be received, and in response to the user input, at least one of pause playback, resume playback, fast forward playback, and rewind playback of the visual representation may be performed and accordingly, the display of the visual representation in the graphical user interface may be updated based on the performed action. Additionally, it may also be determined whether the synthetic data generated is compatible with a system's visualization tools, for example the system which is to display the visual representation to enable accurate regeneration of the visual representation.

Additionally, to further enhance the visual representation, a three-dimensional (3D) mapping of an entity of the facility onto a corresponding position on the layout representation may be performed for an immersive visual representation. In one example, entity data corresponding to the entity being mapped onto the layout representation may be obtained and displayed on the visual representation. For example, HVAC system data from components such as Air Handling Units (AHUs) running status, fire alarm system status including specific zone activations and overall fire system health, and the like may be represented on the visual representation, allowing users to simultaneously monitor and analyze performance and operational patterns of various entities of the facility in real time. This immersive 3D visualization may allow facility managers and security personnel to quickly assess the overall state of the building, identify potential issues, and make informed decisions about resource allocation and emergency response. The integration of multiple data sources into a single, intuitive visual representation may significantly enhance situational awareness and operational efficiency.

Therefore, techniques of the present subject matter enhance visualization of access events across a facility through dynamic, map-based representations. These techniques improve security monitoring by enabling intuitive tracing of user movements and multi-user tracking, while enhancing efficiency of data review through time compression and customizable filtering options. Further, detecting anomalies allows for quick identification of unusual movement patterns. Additionally, real-time situational awareness is improved by providing continuous updates and 3D immersive visualizations, contributing to better overall facility management by integrating access event data with other building systems such as HVAC and fire alarm systems.

The above and other features, aspects, and advantages of the subject matter will be explained with regard to the following description and accompanying figures. It should be noted that the description and figures merely illustrate the principles of the present subject matter along with examples described herein and should not be construed as a limitation to the present subject matter. It is thus understood that various arrangements may be devised that, although not explicitly described or shown herein, embody the principles of the present disclosure. Moreover, all statements herein reciting principles, aspects, and examples thereof, are intended to encompass equivalents thereof. Further, for the sake of simplicity, and without limitation, the same numbers are used throughout the drawings to reference like features and components.

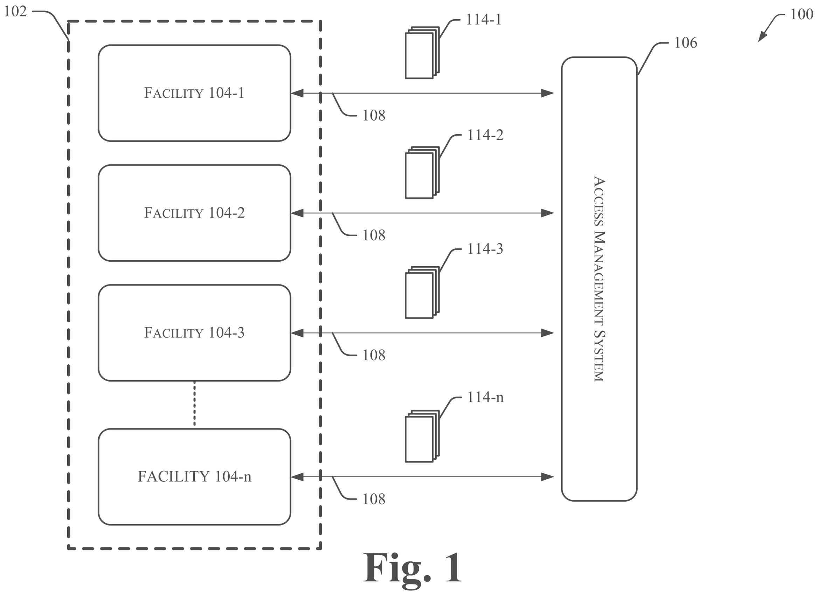

Fig. 1 illustrates a network environment 100, in accordance with an example implementation of the present subject matter. In one example, the network environment 100 may include a network 102, for example such as a supply chain network 102, including multiple facilities, 104-1, 104-2, 104-3, ....104-n, collectively and alternatively referred to as multiple facilities 104 or facility 104. For example, but not limited to, the facility 104 may be a commercial office building, a multistorey residential complex, educational institutions, data centers, airports, retail spaces, hospital and healthcare facilities, a warehouse in a packaging industry, an assembling unit of an automobile manufacturing company, a consumer-goods manufacturing unit, an e-commerce storage unit, a cold storage of a food manufacturing company, a pharmaceutical manufacturing unit, and the like. In one example, the multiple facilities 104 may be distributed across different locations in the network 102.

Each facility of the multiple facilities 104 may include a facility management system (not shown in the figure). In one example, the facility management system may be employed in each facility 104 for facility management. In one example, the facility management system may be part of a source device (not shown in the figure), where the source device may be an Internet of things (IOT) device, a computing device, a personal computer, a laptop, a tablet, a mobile phone, and the like. In another example, the facility management system may be hosted on a server (not shown in the figure) that may communicate with the source device.

In one example, the facility management system of each of the multiple facilities 104 may be communicatively coupled to an access management system 106. The facility management systems and the access management system 106 may communicate over a network 108. The network 108 may be a wireless network or a combination of a wired and wireless network. The network 108 can also include a collection of individual networks, interconnected with each other and functioning as a single large network, such as the Internet. Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), Long Term Evolution (LTE), and Integrated Services Digital Network (ISDN). Depending on the terminology, the communication network includes various network entities, such as gateways and routers; however, such details have been omitted to maintain the brevity of the description.

Further, the access management system 106 may be implemented in any computing system, such as a storage array, a server, a desktop or a laptop, a computing device, a distributed computing system, or the like. Although not depicted, the access management system 106 may include other components, such as interfaces to communicate over the network or with external storage or computing devices, display, input/output interfaces, operating systems, applications, data, and other software or hardware components (not depicted for the sake of brevity).

In one example, the access management system 106 may obtain data 114-1, 114-2, 114-3, ..., 114-n, collectively referred to as data 114, from multiple facilities 104-1, 104-2, 104-3, ....104-n, respectively. In one example, the data 114 generated by the multiple facilities 104, amongst other information, may include information associated with access event records containing timestamps, user identifiers, location information, and event types; type of access detection units; data associated with control systems of a facility; structural details of the facility; historical data; geographical location of various facilities; user profile data encompassing details such as names, leave records, work time schedules, departments, access levels, and associated images; building layout information including floor and room identifiers, spatial coordinates, and connectivity between areas; entry-specific data, detailing locations, required access levels, and connected spaces, permitted areas for different user categories; visualization related data, integrated building management data such as HVAC status and fire alarm information, storing relevant metrics and operational states, and the like.

On obtaining the data 114 from each of the facilities 104 within the network 102, the access management system 106 may analyse the data 114. The access management system 106 may analyse the data 114 to enhance the visualization of access events across the facility 104. The system 106 may obtain event access data across the facility, which may be in static formats such as a text-based format, with the event access data being indicative of interactions between users and access detection units. The event data may then be synthesized to map the user's movement onto a layout representation of the facility, such as a digital map. Based on such data, a visual representation in a visually dynamic format, for example, a GIF file, an animated clip, a video, a dynamic heat map, and the like, may be generated, allowing enhanced visual representation of the access events across the facility. The enhanced visual representation may enable security personnel, facility managers, or other authorized users to quickly identify patterns, anomalies, or potential security risks facilitating decision-making and proactive security management.

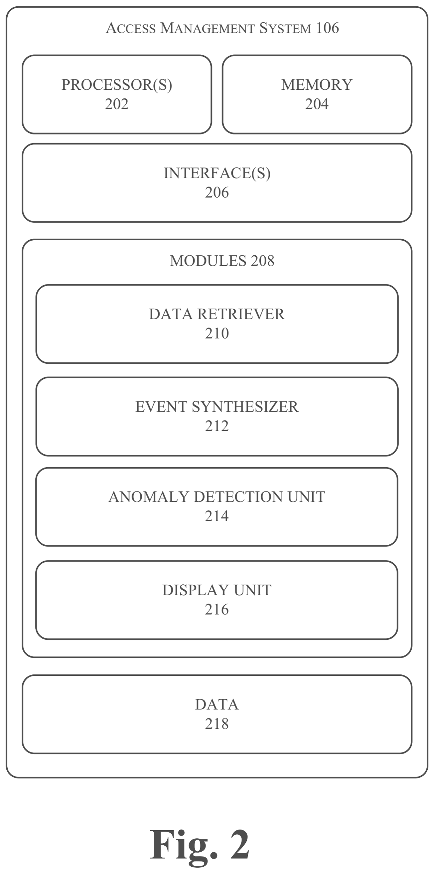

Fig. 2 illustrates an access management system 106, in accordance with an example implementation of the present subject matter. The access management system 106, alternatively referred to as system 106, is to enhance visualization of access events across each facility 104 of the network 102. The facility, such as a commercial building, may include multiple floors, offices, conference rooms, cafeterias, lobbies, elevators, parking garages, restricted areas, data centers, server rooms, laboratories, storage areas, loading docks, reception areas, security checkpoints, and common areas. The access management system 106 may be configured to monitor and manage access to these various areas within the commercial building, providing a comprehensive oversight of personnel movement and security throughout the entire facility.

In one example, the access management system 106 may include a processor 202 and a memory 204 coupled to the processor 202. The functions of functional block labelled as "processor(s)", may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly include, without limitation, digital signal processor (DSP) hardware, network processor, application specific integrated circuit (ASIC), field programmable gate array (FPGA), read only memory (ROM) for storing instructions, random access memory (RAM), non-volatile storage. Other hardware, standard and/or custom, may also be included. Further, an interface(s) 206 may allow the connection or coupling of the system 106 with one or more other devices (say devices or systems within the supply chain network), through a wired (e.g., Local Area Network, i.e., LAN) connection or through a wireless connection (e.g., Bluetooth^{®}, Wi-Fi). The interface(s) 206 may also enable intercommunication between different logical as well as hardware components of the system 106.

The memory 204 may include any computer-readable medium including, for example, volatile memory (e.g., RAM), and/or non-volatile memory (e.g., EPROM, flash memory, etc.).

The access management system 106 may further include modules 208, such as data retriever 210, an event synthesizer 212, and a display unit 216. In one example, module(s) 208 may further include sub-modules (not represented in the figure). The module(s) 208 and the sub-modules, in one example, may be implemented as a combination of hardware and firmware. In examples described herein, such combinations of hardware and firmware may be implemented in several different ways. For example, the firmware for the module and sub-modules may be processor executable instructions stored on a non-transitory machine-readable storage medium and the hardware for the module may include a processing resource (for example, implemented as either a single processor or a combination of multiple processors), to execute such instructions.

In the present examples, the machine-readable storage medium may store instructions that, when executed by the processing resource, implement the functionalities of the module(s) 208 and sub-modules. In such examples, the access management system 106 may include the machine-readable storage medium storing the instructions and the processing resource to execute the instructions. In other examples of the present subject matter, the machine-readable storage medium may be located at a different location but accessible to the access management system 106 and the processor 202.

The access management system 106 may further include data 218, that serves, amongst other things, as a repository for storing data that may be fetched, processed, received, or generated by the modules 208. The data 218 may include access event records containing timestamps, user identifiers, location information, and event types; user profile data encompassing details such as names, departments, access levels, and associated images; building layout information including floor and room identifiers, spatial coordinates, and connectivity between areas; entry-specific data, detailing locations, required access levels, and connected spaces, permitted areas for different user categories; visualization related data, integrated building management data such as HVAC status and fire alarm information, storing relevant metrics and operational states, and the like. In an example, the data 218 may be stored in the memory 204.

For enhancing visualization of access events across facilities, in one example, the data retriever 210 of the access management system 106 may obtain event data associated with one or more users from one or more access detection units of the facility. Access detection units in the facility may include a wide range of devices and systems designed to monitor and control user access. These units may include Human Machine Interface systems (HMIs), card readers, biometric scanners, keypads, cameras with facial recognition capabilities, proximity sensors, and the like. In one example, the event data may be indicative of an interaction of the one or more users with at least one of the one or more access detection units of the facility. For example, the event data may include timestamps indicating when an access attempt occurred, the specific location or identifier of the access point involved, and the outcome of the access attempt (e.g., granted or denied); user identification information such as employee ID numbers, card numbers, or biometric identifiers; a type of credential used for the access attempt, whether it's a physical card, mobile device, or biometric scan; direction of movement (entry or exit), the duration of the access event, and any associated actions like door open/close signals, and the like. In one example, in cases of denied access, the reason for denial may also be recorded, such as expired credentials or insufficient access rights, and the like. Additionally, the event data may also include logs of any alarms triggered during the access event, such as forced entry attempts or doors held open beyond a set time limit; security level of the area being accessed; any overrides applied by security personnel; integrated system data from HVAC and fire alarm system, and the like.

Further, in one example, a layout representation of the facility may be accessed. The layout representation may include a visual depiction of the facility's physical structure, such as 2D floor plans showing the layout of rooms, corridors, and entry/exit points on each level of the facility, 3D building models including multiple floors and exterior features, schematic diagrams of specific areas within the facility, such as data centers or restricted access zones, interactive digital maps that allow zooming and panning to focus on specific areas of interest, and the like. In one example, the layout representation accessed based on various factors, including the user associated with the event data. In some implementations, for a facility comprising multiple structures, the system can retrieve layout representations that may be relevant to the analysis. For example, in a campus with several buildings, the system may access layout data for buildings where the user has been active, buildings of interest to the security personnel, or any combination of structures that provide context for the visualization.

In one example, the layout representation of the facility may be overlaid with locations of the one or more access detection units within the facility. For example, a first floor of a two-story building may include access detection units positioned at the main entrance, reception area, elevator bank, cafeteria, and two emergency exits. Similarly, the second floor may include access detection units positioned at the elevator bank, HR department, Finance department, and two conference rooms. The location of these access detection units spread across the two-story building may be overlaid onto their respective positions on a digital floor map of the two-story building.

In one example, the layout representation may be stored in various digital formats and may be dynamically updated to reflect changes in the facility's structure or the positioning of access detection units. In one example, details associated with each of these access detection units, such as a unique identifier of access detection unit, data recorded by the access detection unit, spatial coordinates of the unit, and the like, may be stored in the memory 204. In another example, details associated with each of these access detection units may be stored in a database on any other system or device, or may be stored in the cloud, and may be made accessible to the system 106.

In one example, a personnel of the facility may select a layout representation for overlaying access detection units across the facility and may also select the access detection units that are to be overlaid onto the layout representation. For example, the personnel, such as a facility manager may select a 3D building model with multiple floors which indicates the location of all the access detection units installed across the entire facility, or may select a 2D floor plan of, for example, the ground floor of a multi-story building overlaid with only with the access detection unit positioned at the entrance, and the like. In another example, the system 106 may select the most appropriate layout representation for overlaying the access detection units based on, for example, historical data, such as historical preferences of particular personnel of the facilities, and the like.

On obtaining the event data associated with one or more users of the facility and the layout representation of the facility overlaid with the access detection units, the event synthesizer 212 of the access management system 106, in one example, may synthesize the event data associated with the one or more users of the facility to determine a path traversed by the one or more users. Synthesizing the event data associated with multiple users of the facility includes transforming the event data from static formats, such as event records or event logs accessed in a text-based formats, into a visually dynamic format. A visually dynamic format is a graphical representation that depicts user movement patterns across a facility in relation to a layout representation of that facility. In one example, this format may include animated or interactive elements that illustrate the temporal and spatial aspects of user movements.

In one example, the system 106 may utilize generative AI techniques to synthesize raw event data to generate visual representations of user movements within a facility. Raw event data, amongst other information, may include timestamps of user interactions with access detection units, locations of access points, user identifiers (IDs), user access restriction data, and the like. This data may be correlated temporally and spatially with corresponding floor plans or access detection unit layouts to reconstruct the movement patterns of users. For instance, each access detection unit may be mapped onto its specific location on the floor plan or access detection unit layout. The event data obtained from the access detection units may be sequentially reconstructed to simulate a visual trail associated with the user in correspondence to the layout representation. Accordingly, a visual representation of the synthesized event data may be generated. For example, in a corporate building, the event synthesizer may process card swipe data for an employee over an 8-hour workday. The synthesizer may analyze the sequence of card swipes at various access points, such as the main entrance, different floor access points, and secure areas. By correlating this data with the building's layout, the event synthesizer may generate a visual representation of the employee's movement throughout the day.

In one example, synthesizing the event data may also include incorporating additional contextual data such as time of day, day of week, or specific building events, to enable quick identification of trends, anomalies, or potential security concerns that might be overlooked in traditional text-based reports. In one example, the access management system 106 may include an anomaly detection unit 214 to analyze the synthesized event data to identify deviations from expected user movement patterns within the facility. In one example, the synthesized event data may be analyzed to identify anomalies in the movement of the one or more users. Anomalies in user movement may be identified based on various factors and patterns. In one example, these anomalies may include unusual access patterns, such as entering restricted areas without proper authorization or accessing areas outside of typical working hours, frequent access attempts at unauthorized entry points, deviations from established routines and expected movement paths, simultaneous access events at multiple locations using the same credentials, unusual duration of stay in specific areas compared to historical patterns, access to areas unrelated to the user's job function or department, and the like. Unusual sequences of access events that do not follow typical workflows, patterns suggesting credential sharing among multiple individuals, or accessing sensitive areas without following proper entry/exit procedures may also be considered anomalous. In one example, machine learning techniques may be employed to establish baseline movement patterns for individual users or user groups, to allow detection of deviations from set patterns which may indicate potential security risks or policy violations. In one example, the identified anomalies may be highlighted in the visual representation to automatically detect and draw attention to unusual patterns or behaviors that might indicate security risks or operational inefficiencies.

Further, in one example, the visual representation may be generated based on one or more filters that may be applied. In one example, a user may specify the filters based on which the visual representation may be dynamically adjusted and generated. For example, the visual representation may be generated based on at least one of access events which have taken place within a particular time range, access events which have taken place within a specific area within the facility, a type of access event, or the like. For instance, the visual representation may be filtered to depict all access events that occurred between 8 PM and 6 AM over the past week, focusing on after-hours activity. Alternatively, events specific to high-security areas, such as the server room or executive offices, may be isolated to monitor sensitive location access. Further, the visual representation may also be filtered based on event type, such as depicting only denied access attempts or emergency exit usage, and the like. Further, in one example, the visual representation may also be filtered based on specific user groups, such as temporary contractors or new employees, and the like to analyze their movement patterns within the facility.

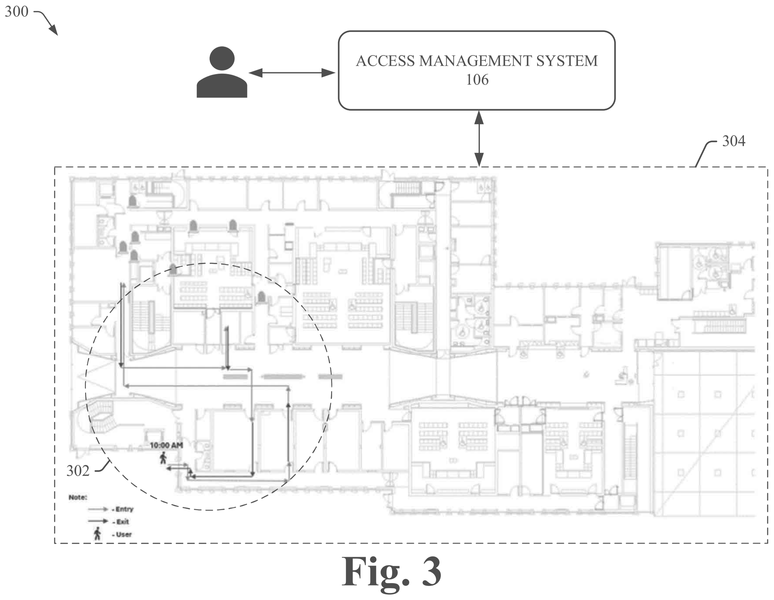

In one example, the event synthesizer 212 of the access management system 106 may generate one or more visual representations based on the synthesized event data and any identified anomalies. These visual representations may be generated based on user requirements or may be generated automatically based on historical preferences and system analysis. In one example, the visual representation may be dynamic in nature such as an animation clip, a Graphics Interchange Format (GIF) files, a video, a dynamic heat map, or the like. In another example, the visual representation may be a static graphical representation indicating a user's movement related to the layout representation of the facility, such as the exemplary representation 300 of user movement 302 in relation to the facility layout 304 as illustrated in Fig. 3.

Furthermore, in one example, new event data from the one or more access detection units of the facility may be obtained and the visual representation may be updated in real-time based on the new event data, allowing for dynamic, live monitoring of facility access and movement patterns. For instance, the visual representation generated at a first instance of time for example, at 10am for a large university campus may depict the current state of student and staff movements across various buildings and outdoor areas. As new events occur, such as students entering lecture halls, or visitors checking in at the administration building, the visual representation continuously updated to reflect these changes. Similarly, if an unauthorized access attempt occurs at a restricted area, like a high-security research facility, the system may instantly highlight this event on the visual representation which can directly draw attention to that specific location on the layout representation of the campus.

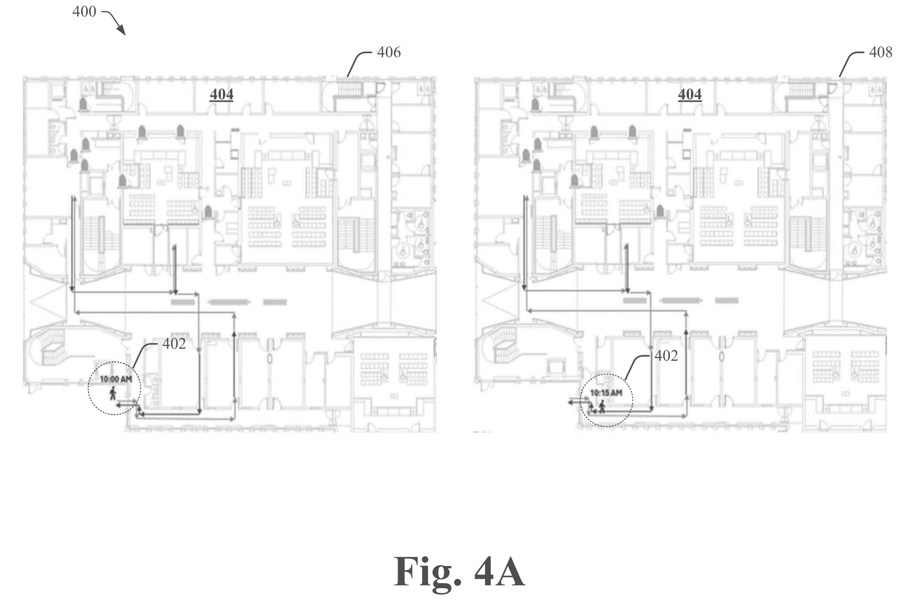

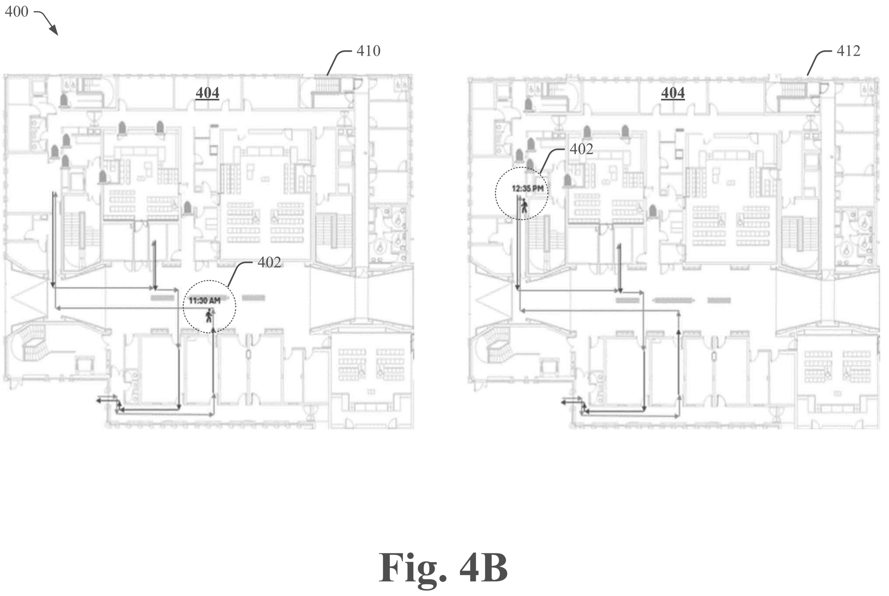

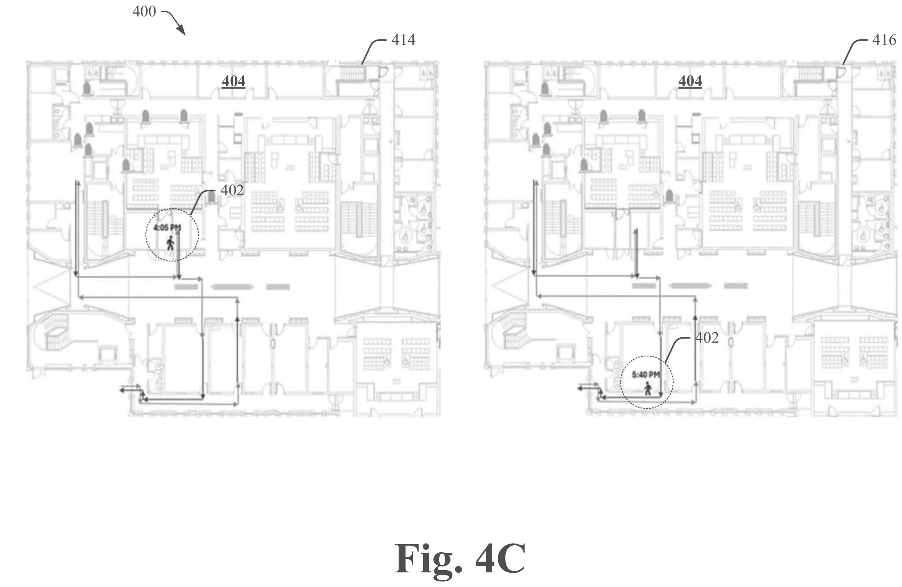

In one aspect, the visual representation generated may be compressed to condense the first time period to a second time period as depicted in Figs. 4A-4C. Figs. 4A -4C illustrate an example of visual representation 400 of a user's 402 movement across the facility 404, in accordance with an example implementation of the present subject matter. The visual representation 400 is represented in parts as a sequence of instances 406, 408, 410, 412, 414, and 416 for the sake of illustrating the principles of the present subject matter and is not to be construed as a limitation. For example, the visual representation 400 may be initially generated for a first time period of 8 hours. A user may request to view the movement of user 402 across the facility 404 from 10AM to 6PM in a compressed format of 30 second duration. To compress the visual representation from an 8-hour clip to a short 30 second clip, the system may employ various data compression and interpolation techniques. In one example, the event synthesizer may modify or change synthetic event data in each frame of the 8-hour long clip. These modified frames may then be selectively sampled and combined to generate the compressed visual representation with a 30s duration. Fig(s). 4A - 4C depict the user's 402 entry and exit paths at various instances of time. An instance 406 depicts the user's 402 entry into the facility 404 at 10AM, thereafter instances 408, 410, 412, and 414 depict a movement of the user at 10:15 AM, 11:30 AM, 12:35 PM, and 4:05 PM, respectively, and the instance 416 depicts the user 402 leaving the facility 404 at 6PM. Therefore, the 30-second compressed clip captures and represents all movements of the user 402 across the facility 404 throughout the entire 8-hour period, from entry to exit. Each frame or segment of the compressed visualization corresponds to a specific timestamp within the original timeframe, allowing viewers to quickly identify the user's location and movement patterns at various points during the day, while maintaining a sequential representation of events from 10AM to 6PM.

Continuing with the description of Fig. 2, in one example, the event synthesizer may identify key events or significant changes in user movement patterns and the identified key frames may be prioritized in the compressed representation to ensure that the most pertinent information is retained for analysis. A compression ratio to condense the visual representation from the first time period to the second time period, a level of detailing to maintained in the compressed clip, such as frame selection, and the like, may be user-defined or may be preset.

Alternatively, in one example, a time-lapsed video may be created to represent the condensed visual representation of user movements across the facility. In one example, the event synthesizer may selectively sample frames at predetermined time intervals, adjust the frame rate to create the illusion of accelerated movement, overlay a timestamp to indicate the actual time represented, allowing viewers to maintain temporal context despite the acceleration, and the like, to create the time-lapsed video. In one example, the time-lapsed video may be generated based on user requirements, where the user may specify time compression ratios, specific focus for one or more users, or a particular area, or a type of event, request for user information to be overlaid, playback speed options for the final time-lapsed video, and the like.

In another example, the event synthesizer may obtain a video from another security system, such as a Closed-Circuit Television (CCTV) system and generate synthetic data to embed event data into the video. For example, the video may include visual indicators such as pop-up notifications that highlight specific events, for example: 'access denied alarm reported' or 'data logged', and the like. In one example, the events may be highlighted based on their priority. For example, events with high priority may be marked in red, events with moderate priority may be marked in yellow and events with low priority may be marked in green directly within the video. Additionally, the event synthesizer may also automatically annotate video recordings obtained from the CCTV system with pertinent access events. For instance, when an event occurs, a small popup may appear alongside the relevant access detection unit, displaying details like event ID, status, and priority to allow viewers to simultaneously access both the video content and event data.

In one example, the visual representation generated may be provided, for example, to personnel of the facility for visualizing the access events across the facility. In one example, the display unit 216 of the access management system 106 may display the visual representation on a user interface, where the user interface allows for personnel interaction with the visual representation. The user interface may provide a range of functionalities to enhance the user's ability to analyze and manipulate the displayed data. For example, but not limited to, the system 106 may receive a user input through a graphical user interface and in response to the user input, perform at least one of pause playback, resume playback, fast forward playback, and rewind playback of the visual representation, and update the display of the visual representation in the graphical user interface based on a performed action. The user may also be able to zoom in and out of specific areas of the facility layout, allowing for both broad overviews and detailed examinations of particular zones. The interface may support panning and scrolling across different floors or sections of large facilities. Additionally, the user interface may also include interactive elements such as clickable access points or user icons, which, when selected, could display additional information like detailed event logs or user profiles. Additionally, to facilitate further analysis, in one example the visual representation may be exported as a report, for example but not limited to, in a text-based format, as synthetic data for regenerating visualizations, as compressed visualizations, as GIFs, visual representation generated on preferred type of layout representation, and the like. Although the following description has been discussed with reference to a two-dimensional mode of visualization, as would be understood, similar principles of the present subject matter would be applicable to a three-dimensional mode of visualization, as well. In one example, the user may provide a preference for viewing the visual representation in a particular visualization mode, which is either a two-dimensional mode or a three-dimensional mode.

Additionally, in one example, three-dimensional (3D) mapping of an entity of the facility onto a corresponding position on the layout representation may be performed for an immersive visual representation. These entities may represent, for example but not limited to, an HVAC system of the facility, or a fire alarm system of the facility, or any other control system of the facility. Further, in one example, entity data corresponding to the entity being mapped onto the layout representation may be displayed on the visual representation. For example, when a large group of employees enter a conference room for a meeting, the visual representation may not only depict their movement and access events but also depict the HVAC system's real-time response, allowing facility managers to understand both user movements and environmental systems responses.

Therefore, techniques of the present subject matter enhance visualization of access events across a facility by transforming static data into dynamic, intuitive visual representations.

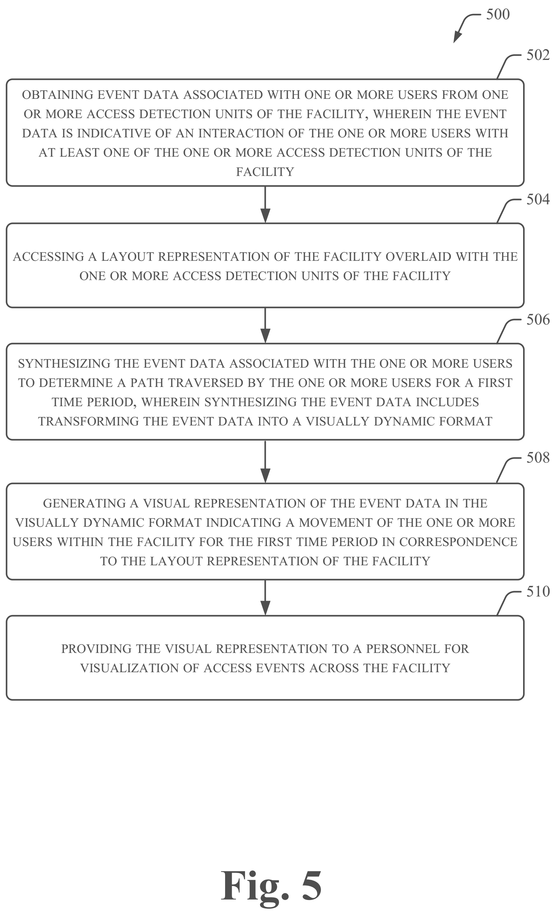

Figs. 5, 6, 7, 8, and 9 illustrate methods 400, 500, 600, 700, 800, and 900 for visualization of access events across a facility, in accordance with examples of the present subject matter. The order in which the methods are described is not intended to be construed as a limitation, and any number of the described method blocks may be combined in any order to implement the methods, or an alternative method. Further, the methods 400, 500, 600, 700, 800, and 900 may be implemented by processing resource or computing device(s) through any suitable hardware, non-transitory machine-readable instructions, or combination thereof.

It may also be understood that methods 400, 500, 600, 700, 800 and 900 may be performed by programmed computing devices, such as the access management system 106, as depicted in Fig. 2. Furthermore, the methods 400, 500, 600, 700, 800 and 900 may be executed based on instructions stored in a non-transitory computer readable medium, as will be readily understood. The non-transitory computer readable medium may include, for example, digital memories, magnetic storage media, such as one or more magnetic disks and magnetic tapes, hard drives, or optically readable digital data storage media. The methods 400, 500, 600, 700, 800 and 900 are described below with reference to the access management system 106, as described above; other suitable systems for the execution of these methods may also be utilized. Additionally, implementation of the method is not limited to such examples.

Fig. 5 illustrates an example method for visualization of access events across a facility, in accordance with an example implementation of the present subject matter. In Fig. 5, at block 502 the method 500 includes obtaining event data associated with one or more users from one or more access detection units of the facility. The event data is indicative of an interaction of the one or more users with at least one of the one or more access detection units of the facility. In one example, the event data obtained from the one or more access detection units may be in a text-based format.

At block 504, the method 500 includes accessing a layout representation of the facility overlaid with the one or more access detection units of the facility. In one example, the layout representation accessed may be inclusive of the one or more access detection units overlaid. In another example, the layout representation and an access detection unit layout map may be obtained separately, and then integrated into one.

At block 506, the method 500 includes synthesizing the event data associated with the one or more users to determine a path traversed by the one or more users for a first time period, where synthesizing the event data includes transforming the event data into a visually dynamic format.

At block 508, the method 500 includes generating a visual representation of the event data in the visually dynamic format indicating a movement of the one or more users within the facility for the first time period in correspondence to the layout representation of the facility. In one example, the visual representation may be compressed to condense the first time period into a second time period. In one example, new event data from the one or more access detection units of the facility may be obtained to update the visual representation in real-time based on the new event data.

At block 510, the method 500 includes providing the visual representation to a personnel for visualization of access events across the facility. In one example, the visual representation may be filtered based on at least one of a time range, a specific area within the facility, and a type of access event. Further, the visual representation may be displayed on a user interface, where the user interface allows for personnel interaction with the visual representation.

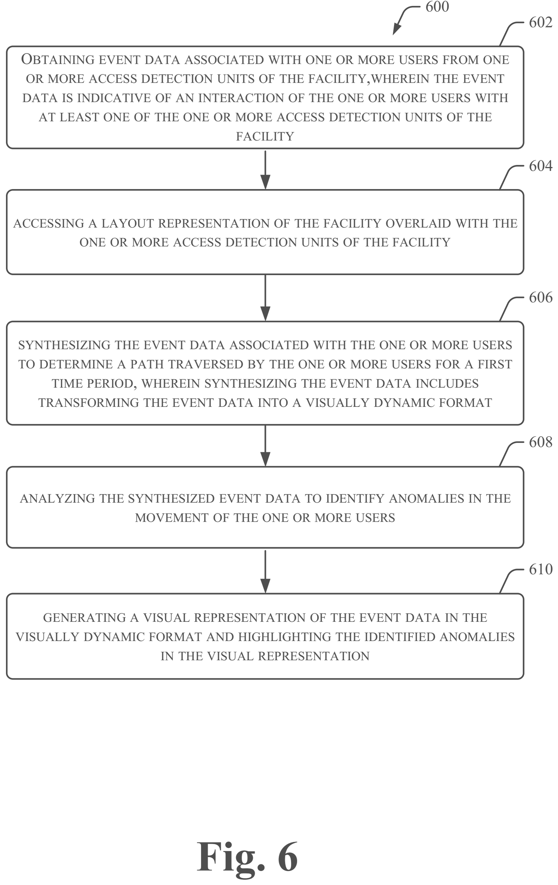

Fig. 6 illustrates an example method for visualization of anomalies in access events across a facility, in accordance with an example implementation of the present subject matter.

At block 602, the method 600 includes obtaining event data associated with one or more users from one or more access detection units of the facility. The event data is indicative of an interaction of the one or more users with at least one of the one or more access detection units of the facility. In one example, the event data obtained from the one or more access detection units may be in a text-based format. For instance, event data from card readers throughout an office building may be obtained, where the event data may include a user ID, a location of access and a time of access. For example, an employee with user ID 'A' may have accessed the main entrance of the office building at 08:15:23.

At block 604, the method 600 includes accessing a layout representation of the facility overlaid with the one or more access detection units of the facility. In one example, a digital floor plan of the building overlaid with locations of access detection units may be retrieved.

At block 606, the method 600 includes synthesizing the event data associated with the one or more users to determine a path traversed by the one or more users for a first time period, where synthesizing the event data includes transforming the event data into a visually dynamic format. In one example, the path traversed by the employee with user ID 'A' may be reconstructed based on the event data obtained from various access detection units across the building. For example, it might create a series of connected lines on the digital floor map, showing how the employee moved from the main entrance to another location of the building.

At block 608, the method 600 includes analyzing the synthesized event data to identify anomalies in the movement of the one or more users. In one example, the synthesized event data may be compared with expected patterns of movement, historical data, or duplication of access with same credentials, and the like to identify an anomaly. For example, it may be determined that the employee with user ID 'A' has accessed the cafeteria at 12:15 PM using their access card. However, at 12:17 PM, just two minutes later, it may be determined that an access attempt using the same credentials was made at a restricted area on a different floor of the building. The simultaneous access at two distant locations using the same credentials which deviates significantly from normal access patterns may be identified as an anomaly.

At block 610, the method 600 includes generating a visual representation of the event data in the visually dynamic format and highlighting the identified anomalies in the visual representation. In one example, an animated clip showing the employee's movements over the course of a day, with the atypical path highlighted and accompanied by pop-up alerts detailing the specific anomalies detected may be generated. In one example, the visual representation may be exported to any other device, system, cloud storage, and the like.

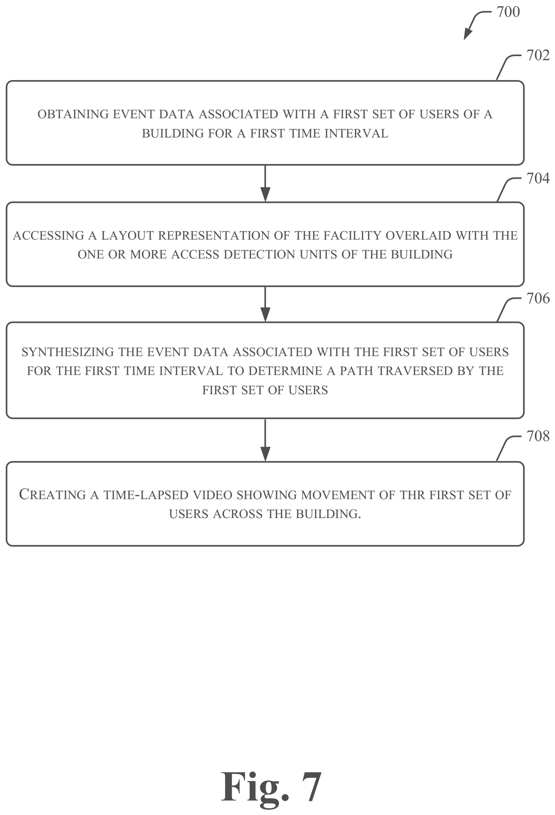

Fig. 7 illustrates an example method for creating a time lapse clip for visualization of access events across the facility, in accordance with an example implementation of the present subject matter.

At block 702, the method 700 includes obtaining event data associated with a first set of users of a building for a first-time interval. The event data is indicative of an interaction of the one or more users with at least one of the one or more access detection units of the building. In one example, the event data may include card swipes or biometric scans, for the first set of users within the first-time interval. For example, event data associated with all employees who entered a corporate office building between 8:00 AM and 5:00 PM on a particular day may be collected.

At block 704, the method 700 includes accessing a layout representation of the facility overlaid with the one or more access detection units of the facility. For example, a digital floor map of the office building may be acquired and may be superimposed with the locations of access control devices, such as card readers or security cameras.

At block 706, the method 700 includes synthesizing the event data associated with the first set of users for the first time interval to determine a path traversed by the first set of users. In one example, based on the event data accessed, paths traversed by multiple employees may be reconstructed on the digital floor map, indicating their movement across the building across multiple access detection units. For example, if an employee's card was swiped at the main entrance at 8:30 AM, then at a conference room at 9:00 AM, and later at their office at 10:00 AM, a path connecting these points on the floor plan may be created. Similarly, the movement associated with the first set of users may be reconstructed.

At block 708, the method 700 includes creating a time-lapsed video showing movement of the first set of users across the building. In one example, the time lapsed video may be a 60-second video depicting the movement of the first set of users throughout the 9 hour workday, with each second of video representing 9 minutes of real time. In one example, the time-lapsed video might show color-coded paths representing different users of the first set of users, with each path dynamically growing across the facility layout as time progresses.

Further, in one example, the time-lapsed video may include adjustable playback speeds, enabling personnel to view the movement patterns at different rates, which may allow for quick overviews of extended periods or detailed analysis of specific time frames. Additionally, the time lapsed video may also be generated based on various criteria, such as specific user groups, types of access events, or particular areas within the facility.

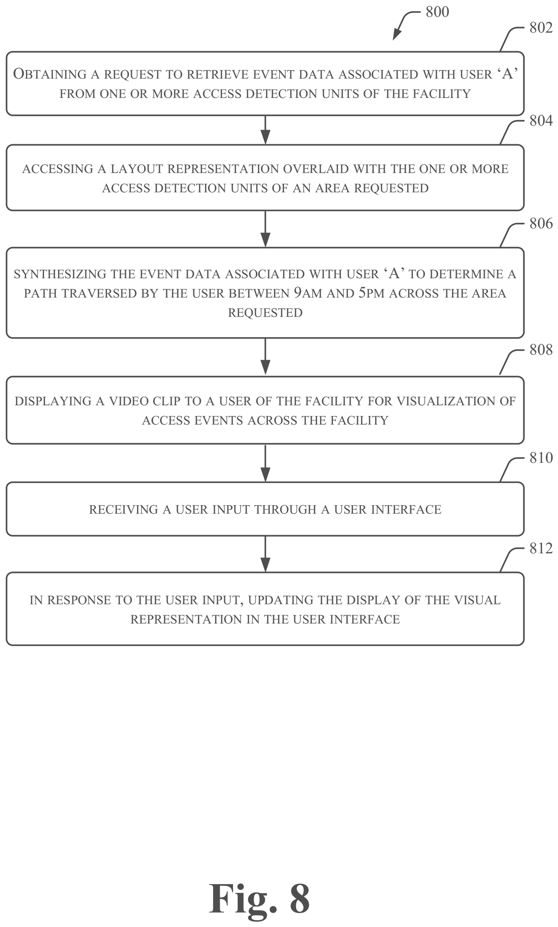

Fig. 8 illustrates another example method for visualization of access events across the facility, in accordance with an example implementation of the present subject matter.

At block 802, the method 800 includes obtaining a request to retrieve event data associated with user 'A' from one or more access detection units of the facility. In one example, the request may be obtained from a user of the facility such as a facility manager, or a security officer of the facility, and the like. In one example, a type of event data associated with the user 'A' may also be requested. For example, the request may specify a type of event data associated with user 'A', such as door access events, elevator usage, or restricted area entries.

At block 804, the method 800 includes accessing a layout representation overlaid with the one or more access detection units of an area requested. For example, if the facility spans over three buildings, but the user wishes to monitor the movement of user 'A' in the first building, in one example, a layout representation of the first building may be acquired.

At block 806, the method 800 includes synthesizing the event data associated with user 'A' to determine a path traversed by the user between 9am and 5pm across the area requested. The path may be determined by analyzing the sequence and timestamps of access events, correlating them with the locations of access detection units, and inferring the most likely route between detected events across the area requested. The synthesizing includes transforming the event data into a visually dynamic format, such as a video clip that represents the user's movement through the facility over time.

At block 808, the method 800 includes displaying the video clip to a user of the facility for visualization of access events across the facility.

At block 810, the method 800 includes receiving a user input through a user interface. For example, the user input may include a request to perform at least one of pause playback, resume playback, fast forward playback, and rewind playback of the visual representation. In another example, the user may also provide a duration for which the video clip may need to be condensed to, for example, 60 seconds, or 2 minutes, and the like.

At block 812, the method 800 includes in response to the user input, updating the display of the visual representation in the user interface.

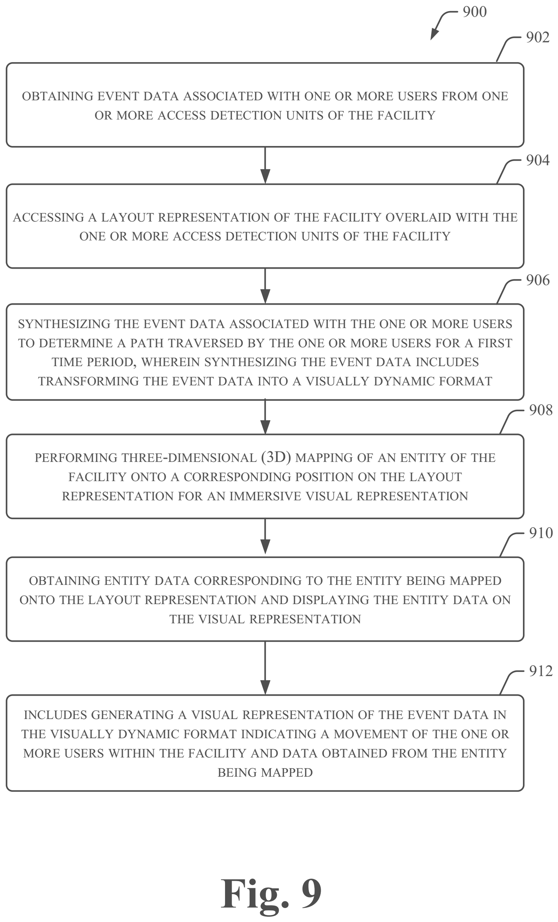

Fig. 9 illustrates another example method for visualization of access events across a facility, in accordance with an example implementation of the present subject matter.

At block 902, the method 900 includes obtaining event data associated with one or more users from one or more access detection units of the facility. The event data being indicative of an interaction of the one or more users with at least one of the one or more access detection units of the facility. For example, the event data may include card swipe data from multiple employees entering and exiting various rooms throughout an office building over the course of a workday.

At block 904, the method 900 includes accessing a layout representation of the facility overlaid with the one or more access detection units of the facility. For example, a digital 3D model of the office building including the locations of all card readers and access points may be included.

At block 906, the method 900 includes synthesizing the event data associated with the one or more users to determine a path traversed by the one or more users for a first time period, where synthesizing the event data includes transforming the event data into a visually dynamic format. With reference to the example described, the collected card swipe data may be synthesized to create animated paths showing the movement of employees through the building over time.

At block 908, the method 900 includes performing three-dimensional (3D) mapping of an entity of the facility onto a corresponding position on the layout representation for an immersive visual representation. In this case, the entity may be, for instance a HVAC system, which is mapped onto the 3D model of the building, showing the location of air handling units, ducts, and vents.

At block 910, the method 900 includes obtaining entity data corresponding to the entity being mapped onto the layout representation and displaying the entity data on the visual representation. For the HVAC system, this may involve collecting, for example, real-time temperature data from sensors throughout the building and overlaying this information on the 3D model.

At block 912, the method 900 includes generating a visual representation of the event data in the visually dynamic format indicating a movement of the one or more users within the facility and data obtained from the entity being mapped, for the first time period in correspondence to the layout representation of the facility. In this example, the method may generate a visual representation that combines multiple elements, such as animated paths showing employee movements throughout the day, based on their card swipe data; a color-coded overlay representing temperature variations across different areas of the building; and visual indicators of HVAC system components, such as air handling units and vents. As the visualization plays out over time, the method may reveal how employee movements correlate with temperature changes in different areas. For instance, a conference room may show a gradual temperature increase as it fills with people for a meeting, triggering the HVAC system to adjust accordingly. Similarly, areas with high foot traffic may exhibit different temperature patterns compared to less frequented spaces, and the like. Similarly, other 3D representations of other control systems and the data associated with them may be represented dynamically on the visual representation.

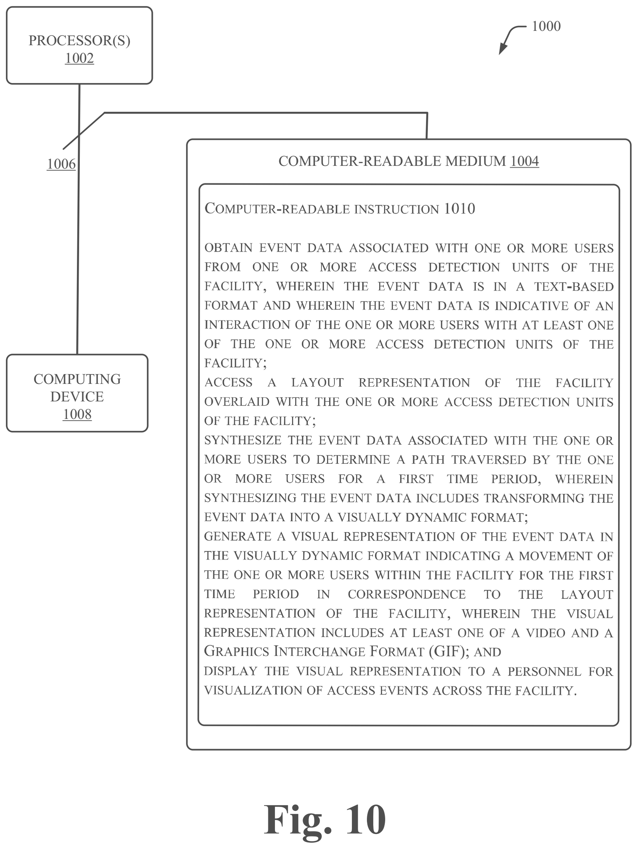

Fig. 10 illustrates a non-transitory computer-readable medium for visualization of access events across a facility, in accordance with an example of the present subject matter. In an example, the computing environment 1000 includes processor 1002 communicatively coupled to a non-transitory computer readable medium 1004 through communication link 1006. In an example implementation, the computing environment 1000 may be for example, the access management system 106 for visualizing of access events across a facility. In an example, the processor 1002 may have one or more processing resources for fetching and executing computer-readable instructions from the non-transitory computer readable medium 1004. The processor 1002 and the non-transitory computer readable medium 1004 may be implemented, for example, in the system for visualization of access events across a facility.

The non-transitory computer readable medium 1004 may be, for example, an internal memory device or an external memory. In an example implementation, the communication link 1006 may be a network communication link, or other communication links, such as a PCI (Peripheral component interconnect) Express, USB-C (Universal Serial Bus Type-C) interfaces, I2C (Inter-Integrated Circuit) interfaces, and the like. In an example implementation, the non-transitory computer readable medium 1004 includes a set of computer readable instructions 1010 which may be accessed by the processor 1002 through the communication link 1006 and subsequently executed for visualization of access events across a facility. The processor(s) 1002 and the non-transitory computer readable medium 1004 may also be communicatively coupled to a computing device 1008 over the network.

Referring to Fig. 10, in an example, the non-transitory computer readable medium 1004 includes computer readable instructions 1010 that cause the processor 1002 to obtain event data associated with one or more users from one or more access detection units of the facility, where the event data is in a text-based format. The event data being indicative of an interaction of the one or more users with at least one of the one or more access detection units of the facility. The instructions 1010 may further cause the processor 1002 to access a layout representation of the facility overlaid with the one or more access detection units of the facility. Further, the instructions 1010 may cause the processor 1002 to synthesize the event data associated with the one or more users to determine a path traversed by the one or more users for a first time period, where synthesizing the event data includes transforming the event data into a visually dynamic format.

The instructions 1010 may further cause the processor 1002 to generate a visual representation of the event data in the visually dynamic format indicating a movement of the one or more users within the facility for the first time period in correspondence to the layout representation of the facility, where the visual representation includes at least one of a video and a Graphics Interchange Format (GIF). Further, the instructions 1010 may also cause the processor 1002 to further display the visual representation to a personnel for visualization of access events across the facility. In one example, the instructions 1010 may also cause the processor 1002 to further receive a user input through a user interface and in response to the user input, perform at least one of pause playback, resume playback, fast forward playback, and rewind playback of the visual representation, and also update the display of the visual representation in the user interface based on a performed action.

Although examples of the present subject matter have been described in language specific to methods and/or structural features, it is to be understood that the present subject matter is not limited to the specific methods or features described. Rather, the methods and specific features are disclosed and explained as examples of the present subject matter.

## Claims

1. A method for visualization of access events across a facility, the method comprising:
obtaining event data associated with one or more users from one or more access detection units of the facility, wherein the event data is indicative of an interaction of the one or more users with at least one of the one or more access detection units of the facility;
accessing a layout representation of the facility overlaid with the one or more access detection units of the facility;
synthesizing the event data associated with the one or more users to determine a path traversed by the one or more users for a first time period, wherein synthesizing the event data includes transforming the event data into a visually dynamic format;
generating a visual representation of the event data in the visually dynamic format indicating a movement of the one or more users within the facility for the first time period in correspondence to the layout representation of the facility; and
providing the visual representation to a personnel for visualization of access events across the facility.

2. The method of claim 1 further comprising compressing the visual representation to condense the first time period into a second time period.

3. The method of claim 1 further comprising
analyzing the synthesized event data to identify anomalies in the movement of the one or more users; and
highlighting the identified anomalies in the visual representation.

4. The method of claim 1 further comprising obtaining new event data from the one or more access detection units of the facility and updating the visual representation in real-time based on the new event data.

5. The method of claim 1 further comprises filtering the visual representation based on at least one of a time range, a specific area within the facility, and a type of access event.

6. The method of claim 1 further comprising creating a time-lapsed video of the visual representation displaying the movement of the one or more users within the facility.

7. The method as claimed in claim 1, wherein the visual representation is displayed on a user interface, wherein the user interface allows for personnel interaction with the visual representation.

8. The method of claim 1, wherein the event data obtained from the one or more access detection units is in a text-based format.

9. The method of claim 1 further comprises three-dimensional (3D) mapping of an entity of the facility onto a corresponding position on the layout representation for an immersive visual representation.

10. The method of claim 9 further comprises obtaining entity data corresponding to the entity being mapped onto the layout representation and displaying the entity data on the visual representation.

11. An access management system for visualization of access events across a facility, the system comprising:
at least one processor;
a memory comprising instructions that, when executed by the at least one processor causes:
a data retriever to:
obtain event data associated with one or more users from one or more access detection units of the facility, wherein the event data is indicative of an interaction of the one or more users with at least one of the one or more access detection units of the facility;
access a layout representation of the facility and overlay the one or more access detection units of the facility onto the layout representation;
an event synthesizer to:
synthesize the event data associated with the one or more users to determine a path traversed by the one or more users for a first time period, wherein synthesizing the event data includes transforming the event data into a visually dynamic format;
generate a visual representation of the event data in the visually dynamic format indicating a movement of the one or more users within the facility for the first time period in correspondence to the layout representation of the facility; and
a display unit to:
display the visual representation to a personnel for visualization of access events across the facility.

12. The system of claim 11, wherein the event synthesizer is to compress the visual representation to condense the first time period into a second time period.

13. The system of claim 11, wherein an anomaly detection unit is to:
analyze the synthesized event data to identify anomalies in the movement of the one or more users; and
highlight the identified anomalies in the visual representation.

14. A non-transitory computer-readable medium comprising instructions for visualization of access events across a facility, the instructions being executable by a processor to:
obtain event data associated with one or more users from one or more access detection units of the facility, wherein the event data is in a text-based format and wherein the event data is indicative of an interaction of the one or more users with at least one of the one or more access detection units of the facility;
access a layout representation of the facility overlaid with the one or more access detection units of the facility;
synthesize the event data associated with the one or more users to determine a path traversed by the one or more users for a first time period, wherein synthesizing the event data includes transforming the event data into a visually dynamic format;
generate a visual representation of the event data in the visually dynamic format indicating a movement of the one or more users within the facility for the first time period in correspondence to the layout representation of the facility, wherein the visual representation includes at least one of a video and a Graphics Interchange Format (GIF); and
display the visual representation to a personnel for visualization of access events across the facility.

15. The non-transitory computer-readable medium as claimed in claim 14, wherein the instructions being executable by the processor are to further:
receive a user input through a user interface; and
in response to the user input, perform at least one of pause playback, resume playback, fast forward playback, and rewind playback of the visual representation, and
update the display of the visual representation in the user interface based on a performed action.
